# EUROPEAN PATENT SPECIFICATION

(11) **EP 3 394 577 B1**
(45) Date of publication and mention of the grant of the patent: **16.12.2020**
(21) Application number: 16840297.2
(22) Date of filing: 22.12.2016
(51) Int. Cl.: G01F 11/02, G01F 11/04, G01F 11/06, B67D 7/02

(54) **A METHOD FOR THE DOSING OF A COLOUR PASTE**
VERFAHREN ZUR DOSIERUNG EINER FARBPASTE
PROCÉDÉ POUR LE DOSAGE D'UNE PÂTE COLORÉE

(30) Priority: 22.12.2015 NL 2016009
(43) Date of publication of application: 31.10.2018
(73) Proprietor: Eskens Solutions B.V., 2404 CK Alphen aan den Rijn (NL)
(72) Inventor: POOT, Joost, 2404 CK Alphen aan den Rijn (NL)
(74) Representative: Plaggenborg, Menko Bernard
(86) International application number: PCT/NL2016/050906
(87) International publication number: WO 2017/111589

(56) References cited:
- GB-A- 2 162 902
- US-A- 6 158 628
- US-A1- 2011 315 718
- US-A1- 2015 021 356

## Description

The present invention relates to a method according to the preamble of claim 1.

Such a method is known in the art.

For example, US Patent 6,158,628 discloses a system, and the corresponding operation method, to dispense a viscous fluid, such as a fluid ink paste, from a container under substantially uniform gas pressure.

For example, US patent application US 2003/0062379 describes a method for adding small amounts of a colorant to a container. The known method is developed for manufacturing very small amounts of a cosmetic product, for example a consumer packaging of a nail varnish, a lip gloss or the like. In case of such small packaging, the amount of colorant must be dosed very accurately, so as to ensure a secure colour control. According to this US patent application syringes were used.

Such a method allows the dosing of a small amount of a liquid. However, it is necessary that the liquid material to be dosed has a low viscosity. So as to prevent the syringe from clogging the amount of solid particles in the liquid must be low. Therefore, this known method has the disadvantage that that the (liquid) colorant to be dosed must contain a relatively large amount of carrier. Such impedes the quality of the product to be manufactured, for example a lip gloss, nail polish and the like.

Therefore, there is a need in the art for a method with which these disadvantages can be avoided.

The invention aims at providing an improved method of the kind mentioned in the preamble.

The invention especially aims at providing a method as mentioned above that allows an accurate dosing.

The invention also aims at providing an improved method allowing pastes with a high viscosity to be dosed.

The invention also aims at providing a method with which small amounts of a very high viscosity liquid can be dosed accurately.

The invention finally aims at providing a device for performing the method.

So as to obtain at least one of the above identified goals, according to a first embodiment the invention the invention provides a method comprising the features of claim 1. This method fulfills the above mentioned aims. The present method especially has the advantage that an accurate dosing of small amounts of high viscosity liquids can be provided.

It has also shown that the present invention can dose very quickly. Such a synergistic effect is completely unexpected. The scope of the invention is defined by the claims.

The invention therefore relates to a method for dosing a colour paste, comprising the step of removing from a stock package and entering into a container a predetermined amount of colour paste, said stock package comprising an output for the dosing of said colour paste, wherein the method comprises the step of using a stock package with: a first pressure chamber at a first pressure; a second pressure chamber at a second pressure which is lower than the first pressure, which chambers are in contact with each other by means of a shut-off valve in order to keep a mutual pressure difference substantially constant; and a storage chamber which comprises the colour paste, said storage chamber being in pressure contact with the second pressure chamber and being in sealable connection with the output by means of a dosing valve for dosing the colour paste when opening the dosing valve, with the provision that the pressure in the storage chamber is higher than the pressure outside the stock package and wherein the second pressure chamber is separated from the storage chamber by means of a movable wall in the stock package. Such provides a direct coupling between the pressure in the second chamber and the pressure in the storage chamber. By opening the dosing valve the material will subsequently be removed from the storage chamber via a drain (or output). The shut-off valve between the first chamber and the second chamber will provide a substantially constant pressure in the second chamber. For example, the pressure in the first chamber may be between 5 bar and 10 bar. When the volume of the first chamber in a starting situation is for example two to five times larger than the volume of the second chamber, wherein the pressure in the first chamber and the second chamber is identical, and in a final situation the volume of the first chamber is for example identical to or maximally twice as small as the volume of the second chamber, wherein the pressure in the first chamber and in the second chamber are identical, the final pressure in both chambers will be substantially larger than 1 bar, with the consequence that a driving force remains to dispense the material from the storage chamber. In this case, it is assumed that the ambient pressure (i.e. the pressure outside the device) is 1 bar. It has now shown, that even a highly viscous colour paste containing a large amount of solid particles, can be dosed accurately by means of the present system. This is a surprising effect since until now it was assumed in the art that colour pastes can only be dosed (in this description also called dispensed) by applying physical pumps.

It has especially shown advantageous to operate the dosing valve by means of an electromagnetic valve or a servo-circuit. This may provide a quick operation with small response times.

It is especially preferred that the operation of the dosing valve has a minimum response time of less than 0.4 seconds (hereafter abbreviated by "sec"), more preferably less than 0.3 sec.

So as to be able to dose very small amounts it is preferred to use a dosing valve that is adapted for operating with a minimum response time of less than 0.2 sec. Most preferred is a response time of less than 0.1 sec, which is especially suitable when a highest pressure is available in the second chamber. A higher pressure in the second chamber will yield a quicker removal of material through the output than a lower pressure, due to a larger driving force.

It has shown that an accurate dosing of small amounts especially can be effected when the dosing valve comprises a needle valve.

So as to be able to manufacture a cosmetic product, a carrier must be dosed besides the colour paste. This may be a petroleum jelly-like material in cases where a lip gloss is to be manufactured. In such case, it is preferred that in a first step a first material is dosed into the container and in a second step the colour paste is dosed into the container. The first material may be a petroleum jelly or the like, for example supplemented with additives, coconut oil, cocoa butter, or the like, which forms the basis for the lip gloss.

According to another aspect, the invention relates to a device for applying the method according to any of the preceding claims, the device comprising at least one stock package with a colour paste, said stock package comprising an output for dosing there through the colour paste, wherein the stock package comprises: a first pressure chamber at a first pressure; a second pressure chamber at a second pressure which is lower than said first pressure, which chambers are in contact with each other by means of a shut-off valve in order to keep a mutual pressure difference substantially constant; and a storage chamber which comprises the colour paste, said storage chamber being in pressure contact with the second pressure chamber and being in sealable connection with the output by means of a dosing valve for dosing the colour paste when opening the dosing valve, with the provision that the pressure in the storage chamber is higher than the pressure outside the stock package, and wherein the second pressure chamber is separated from the storage chamber by means of a movable wall in the stock package. This device fulfills at least some of the goals mentioned in the preamble of this description, as will be clear to a skilled person after reading this description.

It is especially preferred that the device comprises at least two stock packages, wherein a first stock package comprises a colour paste and a second stock package comprises a base for the production of a cosmetic product, in particular a lip gloss or a nail polish. As a consequence, the device can easily be used for manufacturing a desired product, for example a cosmetic product, by providing a separate stock package for each ingredient.

The invention is not limited to cosmetic products. Other materials, in particular viscous materials, can be treated so as to obtain desired products, by using the device according to the invention wherein the device comprises at least two stock packages, wherein a first stock package comprises a colour paste and a second stock package comprises a base for the production of a paint, coating or lacquer.

The term "viscous materials" relates to materials that have a viscosity that is higher than that of water, which has a viscosity of about 1 mPa.s, like a viscosity of at least 100 mPa.s, preferably at least 500 mPa.s, for example at least 1 Pa.s.

So as to obtain an accurate dosing of each ingredient it is preferred that each stock package comprises its own dosing valve.

An effective manufacturing is also obtained when the device further comprises a control device for controlling the at least one dosing valve. Preferably, the one control device may control all separate dosing valves. As a consequence, a central computer may thus control all separate dosing valves when setting a desired product to be manufactured.

A simple production of manufacture is obtained when the device comprises a displacement device for a container into which the colour paste has been dosed, said displacement device being adapted for displacing the container from the output of the stock package towards a treatment station. In the first instance, the container may be filled with a base material, for example petroleum jelly or the like, for manufacturing a lip gloss and subsequently be transported towards an output for dosing into the container the colour paste, after which optional other materials can be dosed for further addition of materials in the container. Optionally, a colorant may be dosed in a first step after which the base material is added subsequently. The container may also be displaced towards the mixing station after dosing the colour paste.

Therefore, in the device according to the invention it is preferred that the treatment station is comprised of: an output of a different stock package for dosing a different material into the container; and a mixing station, for mixing of materials that have been dosed into the container. The invention is not limited to such treatment stations. Other treatments that are commonly applied in the art can be performed after the ingredients have been dosed into the container. Heating or applying a label or the like are examples of such other treatments.

Hereinafter, the invention will be explained with reference to the drawing. The drawing shows in:

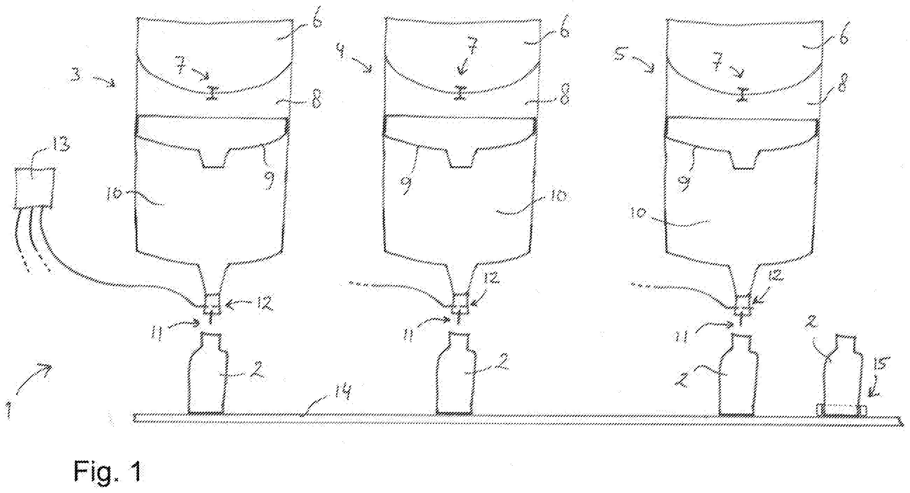

Fig. 1 a schematic flow diagram of a production line for the production of cosmetic products in a container.

In the figures analogous parts are denoted by the same reference numerals. However, for sake of simplicity of the presentation, not all parts that are necessary for a practical embodiment of the invention have been shown.

Fig. 1 shows a schematic flow diagram of a production line 1 for producing cosmetic products in a container 2. In the embodiment shown, the production line 1 comprises three stock packages 3, 4, 5 which each may contain a different kind of material. In the embodiment shown, it is assumed that the first stock package 3 comprises a base material for manufacturing a lip gloss, for example a petroleum jelly-like material. The second stock package 4 comprises a colour paste, whereas the last stock package 5 comprises a glitter material. The colour paste and the glitter have a high solids loading, and as a consequence the material has a high viscosity. The petroleum jelly also has a high viscosity.

Each stock package 3, 4, 5 comprises a first pressure chamber 6, in which gas may be contained at high pressure. For example, air may be used for this purpose, or an inert gas. The gas should be substantially inert with respect to the stock package's material. When the stock package's material is not reactive with respect to any gas, any gas may be contained in the first pressure chamber 6.

The first pressure chamber 6 is in communication with a second pressure chamber 8 by means of a shut-off valve 7. The shut-off valve 7 provides for maintenance of a substantially continuous pressure difference between the first pressure chamber 6 and second pressure chamber 8. The second pressure chamber 8 is in communication with a storage chamber 10 by means of a moveable wall 9, said storage chamber 10 comprising the material that should be dosed through an output 11 from the stock package 3, 4, 5 into the container 2. The storage chamber 10 is closed off by means of a controllable dosing valve 12 which prevents that the material can freely be removed from the stock package.

The dosing valve 12 is controlled by a control device or a control computer 13. This can perform a sequence of schemes, with the result that in a first step a predetermined amount of the material is dispensed from stock package 3, after which a predetermined amount of material is dispensed from stock package 4 and finally a predetermined amount of material is dispensed from stock package 5. A transport device 14 has been provided as well which transports the container 2 from one to the other stock package 3; 4; 5. The transport device 14 is preferably also controlled by control device 13.

Finally, a mixing device 15 has been provided which provides for a mixing of the different materials from the stock packages 3; 4; 5 into the container 2.

The invention is not limited to the embodiments as described above and as shown in the drawing. The invention is limited only by the appending claims.

## Claims

1. A method for dosing a colour paste, comprising the step of removing from a stock package (4) and entering into a container (2) a predetermined amount of colour paste, said stock package (4) comprising an output (11) for the dosing of said colour paste, wherein the method comprises the step of using a stock package (4) with: a first pressure chamber (6) at a first pressure; a second pressure chamber (8) at a second pressure which is lower than the first pressure, which chambers (6, 8) are in contact with each other by means of a shut-off valve (7) in order to keep a mutual pressure difference substantially constant; and a storage chamber (10) which comprises the colour paste, said storage chamber (10) being in pressure contact with the second pressure chamber (8) and being in sealable connection with the output (11) by means of a dosing valve (12) for dosing the colour paste when opening the dosing valve (12), with the proviso that the pressure in the storage chamber (10) is higher than the pressure outside the stock package (4), and wherein the second pressure chamber (8) is separated from the storage chamber (10) by means of a movable wall (9) in the stock package (4).

2. The method according to claim 1, wherein the method comprises the step of operating the dosing valve (12) by means of an electromagnetic valve or a servo-circuit.

3. The method according to claim 1, wherein the operation of the dosing valve (12) has a minimum response time of less than 0.4 sec, preferably less than 0.3 sec.

4. The method according to claim 3, wherein the dosing valve (12) is adapted for operating with a minimum response time of less than 0.2 sec, preferably less than 0.1 sec.

5. The method according to claim 1, wherein the dosing valve (12) comprises a needle valve.

6. The method according to claim 1, wherein in a first step a first material is dosed into a container (2) and in a second step the colour paste is dosed into the container (2).

7. A device for applying the method according to any of the preceding claims, comprising at least one stock package (4) with a colour paste, said stock package (4) comprising an output (11) for dosing there through the colour paste, wherein the stock package (4) comprises: a first pressure chamber (6) at a first pressure; a second pressure chamber (8) at a second pressure which is lower than said first pressure, which chambers (6, 8) are in contact with each other by means of a shut-off valve (7) in order to keep a mutual pressure difference substantially constant; and a storage chamber (10) which comprises the colour paste, said storage chamber (10) being in pressure contact with the second pressure chamber (8) and being in sealable connection with the output (11) by means of a dosing valve (12) for dosing the colour paste when opening the dosing valve (12), with the proviso that the pressure in the storage chamber (10) is higher than the pressure outside the stock package (4), and wherein the second pressure chamber (8) is separated from the storage chamber (10) by means of a movable wall (9) in the stock package (4).

8. The device according to claim 7, wherein the device comprises at least two stock packages, wherein a first stock package (4) comprises a colour paste and a second stock package (3) comprises a base for the production of a cosmetic product, in particular a lip gloss or a nail polish.

9. The device according to claim 7, wherein the device comprises at least two stock packages, wherein a first stock package (4) comprises a colour paste and a second stock package comprises a base for the production of a paint, coating or lacquer.

10. The device according to claim 7, 8, or 9, wherein each stock package comprises its own dosing valve (12).

11. The device according to claim 7, wherein the device further comprises a control (13) for controlling the at least one dosing valve (12).

12. The combination of a container (2) and a device according to claim 7, wherein the device comprises a displacement device (14) for said container (2) into which the colour paste has been dosed, said displacement device (14) being adapted for displacing the container (2) from the output of the stock package (4) towards a treatment station.

13. A treatment station for use with the combination according to claim 12, wherein the treatment station is comprised of: an output (11) of a different stock package (3, 4, 5) for dosing a different material into the container (2); and a mixing station, station (15), for mixing of materials that have been dosed into the container (2).

## Patentansprüche

1. Verfahren zum Dosieren einer Farbpaste, welches den Schritt des Entnehmens einer bestimmten Farbpastenmenge von einer Vorratspackung (4) und Einfüllen in einen Behälter (2) umfasst, worin die Vorratspackung (4) einen Auslass (11) für das Dosieren der Farbpaste umfasst, wobei das Verfahren den Schritt des Verwendens einer Vorratspackung (4) umfasst, mit:
einer ersten Druckkammer (6) mit einem ersten Druck;
einer zweiten Druckkammer (8) mit einem zweiten Druck, der geringer ist als der erste Druck,
worin die Kammern (6, 8) mittels eines Absperrventils (7) miteinander in Kontakt stehen, um einen wechselseitigen Druckunterschied im Wesentlichen konstant zu halten; und
eine Speicherkammer (10), die die Farbpaste umfasst, worin die Speicherkammer (10) mit der zweiten Druckkammer (8) in Druckkontakt steht und zum Dosieren der Farbpaste mit dem Auslass (11) mittels eines Dosierventils (12) in abdichtbarer Verbindung steht, wenn das Dosierventil (12) geöffnet ist, mit der Bedingung, dass der Druck in der Speicherkammer (10) höher ist als der Druck außerhalb der Vorratspackung (4), und worin die zweite Druckkammer (8) von der Speicherkammer (10) mittels einer bewegbaren Wand (9) in der Vorratspackung (4) getrennt ist.

2. Verfahren nach Anspruch 1, wobei das Verfahren den Schritt des Betreibens des Dosierventils (12) mittels eines elektromagnetischen Ventils oder eines Servo-Schaltkreises umfasst.

3. Verfahren nach Anspruch 1, wobei das Betreiben des Dosierventils (12) eine minimale Reaktionszeit von weniger als 0,4 Sekunden, vorzugsweise weniger als 0,3 Sekunden aufweist.

4. Verfahren nach Anspruch 3, worin das Dosierventil (12) angepasst ist, mit einer minimalen Reaktionszeit von weniger als 0,2 Sekunden, vorzugsweise weniger als 0,1 Sekunden betrieben zu werden.

5. Verfahren nach Anspruch 1, worin das Dosierventil (12) ein Nadelventil umfasst.

6. Verfahren nach Anspruch 1, wobei in einem ersten Schritt ein erstes Material in einen Behälter (2) und in einem zweiten Schritt die Farbpaste in den Behälter (2) dosiert wird.

7. Einrichtung zum Anwenden des Verfahren nach einem der vorstehenden Ansprüche, welche mindestens eine Vorratspackung (4) mit einer Farbpaste umfasst, worin die Vorratspackung (4) einen Auslass zum Dosieren der Farbpaste dort hindurch umfasst, worin die Vorratspackung (4) umfasst:
eine erste Druckkammer (6) mit einem ersten Druck;
eine zweite Druckkammer (8) mit einem zweiten Druck, der geringer ist als der erste Druck,
worin die Kammern (6, 8) mittels eines Absperrventils (7) miteinander in Kontakt stehen, um einen wechselseitigen Druckunterschied im Wesentlichen konstant zu halten;
und eine Speicherkammer (10), die die Farbpaste umfasst, worin die Speicherkammer (10) mit der zweiten Druckkammer (8) in Drucckontakt steht und zum Dosieren der Farbpaste mit dem Auslass (11) mittels eines Dosierventils (12) in einer abdichtbaren Verbindung steht, wenn das Dosierventil (12) geöffnet ist, mit der Bedingung dass der Druck in der Speicherkammer (10) höher ist als der Druck außerhalb der Vorratspackung (4), und worin die zweite Druckkammer (8) von der Speicherkammer (10) mittels einer bewegbaren Wand (9) in der Vorratspackung (4) getrennt ist.

8. Einrichtung nach Anspruch 7, worin die Einrichtung mindestens zwei Vorratspackungen umfasst, worin eine erste Vorratspackung (4) eine Farbpaste umfasst, und eine zweite Vorratspackung (3) eine Basis zur Produktion eines kosmetischen Produktes umfasst, insbesondere eines Lipgloss oder eines Nagellacks.

9. Einrichtung nach Anspruch 7, worin die Einrichtung mindestens zwei Vorratspackungen umfasst, worin eine erste Vorratspackung (4) eine Farbpaste umfasst, und eine zweite Vorratspackung (3) eine Basis zur Produktion einer Farbe, einer Beschichtung oder eines Lackes umfasst.

10. Einrichtung nach Anspruch 7, 8, oder 9, worin jede Vorratspackung ihr eigenes Dosierventil (12) umfasst.

11. Einrichtung nach Anspruch 7, worin die Einrichtung weiter eine Steuerung (13) zum Steuern des mindestens einen Dosierventils (12) umfasst.

12. Kombination eines Behälters (2) und einer Einrichtung nach Anspruch 7, worin die Einrichtung eine Versetzungseinrichtung (14) für den Behälter (2), in den die Farbpaste dosiert wurde, umfasst, worin die Versetzungseinrichtung (14) angepasst ist, den Behälter (2) von dem Auslass der Vorratspackung (4) zu einer Verarbeitungsstation zu versetzen.

13. Verarbeitungsstation zur Verwendung mit der Kombination nach Anspruch 12, worin die Verarbeitungsstation umfasst: einen Auslass (11) einer anderen Vorratspackung (3, 4, 5) zum Dosieren eines anderen Materials in den Behälter (2); und eine Mischstation (15) zum Mischen des Materials, das in den Behälter (2) dosiert wurde.

## Revendications

1. Procédé pour le dosage d'une pâte colorée, comprenant l'étape de retrait, à partir d'un emballage de stockage (4), et d'entrée, dans un récipient (2), d'une quantité prédéterminée de pâte colorée, ledit emballage de stockage (4) comprenant une sortie (11) pour le dosage de ladite pâte colorée, le procédé comprenant l'étape d'utilisation d'un emballage de stockage (4) ayant : une première chambre de pression (6) à une première pression ; une seconde chambre de pression (8) à une seconde pression qui est inférieure à la première pression, lesquelles chambres (6, 8) sont en contact l'une avec l'autre au moyen d'une soupape d'arrêt (7) afin de maintenir une différence de pression mutuelle sensiblement constante ; et une chambre de stockage (10) qui comprend la pâte colorée, ladite chambre de stockage (10) étant en contact de pression avec la seconde chambre de pression (8) et étant en liaison, pouvant être scellée de manière étanche, avec la sortie (11) au moyen d'une vanne de dosage (12) pour doser la pâte colorée lors de l'ouverture de la vanne de dosage (12), à condition que la pression dans la chambre de stockage (10) soit plus élevée que la pression à l'extérieur de l'emballage de stockage (4), et la seconde chambre de pression (8) étant séparée de la chambre de stockage (10) au moyen d'une paroi mobile (9) dans l'emballage de stockage (4).

2. Procédé selon la revendication 1, le procédé comprenant l'étape d'actionnement de la vanne de dosage (12) au moyen d'une vanne électromagnétique ou d'un servo-circuit.

3. Procédé selon la revendication 1, dans lequel le fonctionnement de la vanne de dosage (12) a un temps de réponse minimal de moins de 0,4 s, de préférence de moins de 0,3 s.

4. Procédé selon la revendication 3, dans lequel la vanne de dosage (12) est adaptée pour fonctionner avec un temps de réponse minimal de moins de 0,2 s, de préférence de moins de 0,1 s.

5. Procédé selon la revendication 1, dans lequel la vanne de dosage (12) comprend une vanne à pointeau.

6. Procédé selon la revendication 1, dans lequel, dans une première étape, un premier matériau est dosé dans un récipient (2) et, dans une seconde étape, la pâte colorée est dosée dans le récipient (2).

7. Dispositif pour la mise en œuvre du procédé selon l'une quelconque des revendications précédentes, comprenant au moins un emballage de stockage (4) ayant une pâte colorée, ledit emballage de stockage (4) comprenant une sortie (11) pour doser la pâte colorée à travers celle-ci, l'emballage de stockage (4) comprenant : une première chambre de pression (6) à une première pression ; une seconde chambre de pression (8) à une seconde pression qui est inférieure à ladite première pression, lesquelles chambres (6, 8) étant en contact l'une avec l'autre au moyen d'une soupape d'arrêt (7) afin de maintenir une différence de pression mutuelle sensiblement constante ; et une chambre de stockage (10) qui comprend la pâte colorée, ladite chambre de stockage (10) étant en contact de pression avec la seconde chambre de pression (8) et étant en liaison, pouvant être scellée de manière étanche, avec la sortie (11) au moyen d'une vanne de dosage (12) pour doser la pâte colorée lors de l'ouverture de la vanne de dosage (12), à condition que la pression dans la chambre de stockage (10) soit plus élevée que la pression à l'extérieur de l'emballage de stockage (4), et la seconde chambre de pression (8) étant séparée de la chambre de stockage (10) au moyen d'une paroi mobile (9) dans l'emballage de stockage (4).

8. Dispositif selon la revendication 7, le dispositif comprenant au moins deux emballages de stockage, un premier emballage de stockage (4) comprenant une pâte colorée et un second emballage de stockage (3) comprenant une base pour la production d'un produit cosmétique, en particulier un brillant à lèvres ou un vernis à ongles.

9. Dispositif selon la revendication 7, le dispositif comprenant au moins deux emballages de stockage, un premier emballage de stockage (4) comprenant une pâte colorée et un second emballage de stockage comprenant une base pour la production d'une peinture, d'un enduit ou d'une laque.

10. Dispositif selon la revendication 7, 8 ou 9, dans lequel chaque emballage de stockage comprend sa propre vanne de dosage (12) .

11. Dispositif selon la revendication 7, le dispositif comprenant en outre une commande (13) pour commander l'au moins une vanne de dosage (12).

12. Combinaison d'un récipient (2) et d'un dispositif selon la revendication 7, dans lequel le dispositif comprend un dispositif de déplacement (14) pour ledit récipient (2) dans lequel la pâte colorée a été dosée, ledit dispositif de déplacement (14) étant apte à déplacer le récipient (2) depuis la sortie de l'emballage de stockage (4) vers une station de traitement.

13. Station de traitement destinée à être utilisée avec la combinaison selon la revendication 12, la station de traitement comprenant : une sortie (11) d'un emballage de stockage différent (3, 4, 5) pour le dosage d'un matériau différent dans le récipient (2) ; et une station de mélange (15), pour le mélange de matériaux qui ont été dosés dans le récipient (2).
